# FASCICULE DE BREVET EUROPEEN

(11) **EP 1 484 095 B1**
(45) Date de publication et mention de la délivrance du brevet: **23.01.2008**
(21) Numéro de dépôt: 04291297.2
(22) Date de dépôt: 21.05.2004
(51) Int. Cl.: B01D 21/00, B01D 17/02

(54) **Décanteur destiné au traitement des effluents usés**
Absetzbecken zur Behandlung von Abflüssen
Settler for the treatment of waste effluents

(30) Priorité: 21.05.2003 FR 0306081
(43) Date de publication de la demande: 08.12.2004
(73) Titulaire: Ergalia, 75015 Paris (FR)
(72) Inventeur: Philip, Hervé, 34660 Cournonsec (FR); Maunoir, Siegfried, 34560 Montbazin (FR)
(74) Mandataire: Derambure, Christian

(56) Documents cités:
- EP-A- 0 354 349
- DE-A- 2 154 216
- FR-A- 2 164 881
- FR-A- 2 341 345
- FR-A- 2 500 760
- US-A- 4 056 477

## Description

L'invention concerne un décanteur destiné au traitement des effluents usés.

En général, les effluents bruts traités dans une station d'épuration, par exemple les effluents domestiques, sont tout d'abord dirigés vers un décanteur, de façon à être déchargés d'une part importante des matières en suspension qu'il contiennent. On obtient ainsi en sortie du décanteur d'une part des effluents décantés, et d'autre part des boues, ces deux fractions subissant ensuite séparément un certain nombre de traitements supplémentaires.

On a développé des systèmes de décantation compacts sous forme de cuves, dans lesquelles la surface efficace de décantation est définie par un ou une pluralité de panneaux inclinés, par l'aménagement de faisceaux de tubes ou par des structures en nids d'abeille.

Ces systèmes de décantation compacts peuvent notamment, mais non exclusivement, être utilisés dans le cas de petites collectivités, ou sur des sites accidentés et/ou difficiles d'accès.

On connaît notamment du document FR 2 699 421 un décanteur comprenant une pluralité de panneaux plans, disposés dans la cuve de façon transversale par rapport à l'écoulement qui serait celui des effluents de l'entrée vers la sortie, en l'absence des tels panneaux. En outre, les panneaux sont inclinés par rapport à la verticale de bas en haut, de l'amont vers l'aval.

Les effluents sont introduits par le bas de la cuve, par une pluralité d'entrées, circulent le long de deux panneaux successifs de bas en haut puis de haut en bas, et sont évacués par la sortie. L'introduction des effluents par le bas de la cuve, sous les panneaux, pose généralement des problèmes hydrauliques, dans la mesure où l'écoulement de l'effluent ne peut intervenir simplement par gravité. En particulier, il est souvent nécessaire de mettre en place un réservoir tampon muni d'un système de pompage permettant précisément l'entrée des effluents usés en partie basse de la cuve.

En outre, un tel agencement ne permet l'installation que d'un seul étage de panneaux, et limite donc la surface de décantation disponible.

On connaît par ailleurs du document EP 0 354 349 un dispositif pour le traitement des effluents usés comprenant un compartiment de décantation pourvu d'une pluralité de panneaux disposés parallèlement et en oblique les uns au-dessus des autres, ces panneaux s'étendant parallèlement au sens d'écoulement des effluents. Ce dispositif présente de nombreux inconvénients.

Tout d'abord, les panneaux présentent tous la même inclinaison, ce qui ne conduit pas à une décantation optimale des effluents.

En outre, les boues évacuées en partie inférieure des panneaux sont réparties sur toute la section horizontale du compartiment. Afin de les diriger vers une zone souhaitée du fond du compartiment, notamment pour leur récupération, il est nécessaire de prévoir une cuve dont la partie inférieure présente la forme d'un entonnoir. Ce type de panneaux ne peut donc être utilisé de façon tout à fait satisfaisante avec une structure quelconque de cuve.

Enfin, une partie des boues contenues dans les effluents ne peut tomber en fond de cuve, du fait de la disposition de certains panneaux dont la pente dirige les boues vers les parois latérales du compartiment. On a alors une accumulation de boues contre ces parois, ce qui réduit les performances de décantation d'un tel compartiment et nécessite des opérations de maintenance régulières.

Le document DE 21 54 216 A décrit un décanteur comprenant deux ensembles comprenant chacun plusieurs panneaux superposés parallèles et inclinés. L'effluent à traiter est introduit dans la cuve en bas de la cuve.

Le document US-A-4 056 477 décrit un décanteur comprenant deux ensembles comprenant chacun plusieurs panneaux superposés parallèles et inclinés.

L'invention propose un décanteur comprenant les éléments énoncés à la revendication 1.

La possibilité de déplacer les boues par glissement dans deux directions différentes vers le fond de la cuve augmente la performance de la décantation.

Le premier angle α et le deuxième angle β sont différents. Selon une première réalisation possible, α et β ont des valeurs absolues différentes. Selon une deuxième réalisation possible, α et β ont la même valeur absolue, les panneaux étant alors inclinés avec des orientations opposées par rapport à la verticale.

Selon une réalisation possible, les premier et deuxième ensembles sont situés de part et d'autre d'un plan de séparation vertical et parallèle au sens d'écoulement des effluents, les panneaux d'un ensemble étant inclinés de haut en bas vers ledit plan de séparation.

De la sorte, les boues sont conduites au fond de la cuve, dans une zone prévue à cet effet. Ainsi, d'une part, leur récupération en est facilitée, notamment via un orifice et un conduit d'évacuation, ce qui est particulièrement intéressant dans le cas où les boues sont ensuite acheminées vers une unité de traitement ultérieur. D'autre part, le risque d'accumulation des boues à proximité de la paroi latérale de la cuve est considérablement diminué.

Selon une autre réalisation possible, les premier et deuxième ensembles sont situés de part et d'autre d'un plan de séparation vertical et parallèle au sens d'écoulement des effluents, les panneaux d'un ensemble étant inclinés de bas en haut vers ledit plan de séparation.

Le plan de séparation est par exemple le plan vertical longitudinal médian de la cuve. Au moins l'un des panneaux du premier ensemble peut être l'image de l'un des panneaux du deuxième ensemble par une symétrie par rapport au plan de séparation.

Une telle surface de décantation, dite lamellaire, permet d'obtenir des performances de décantation optimales. En effet, la superposition des panneaux conduit à l'augmentation de la surface de décantation sans augmentation substantielle du volume de la cuve. En outre, il est possible, avant l'installation de la cuve sur le site de traitement, d'adapter la surface de décantation en fonction du débit d'arrivée des effluents, et ce en augmentant ou en diminuant le nombre de panneaux superposés et/ou en augmentant ou en diminuant leur longueur.

Selon une réalisation possible, au moins un ensemble comprend au moins un premier, un deuxième et un troisième panneaux dont les plans moyens sont sensiblement parallèles, lesdits premier, deuxième et troisième panneaux étant sensiblement superposés dans cet ordre et écartés verticalement l'un de l'autre, l'écartement vertical entre les plans médians des premier et deuxième panneaux étant sensiblement identique à l'écartement vertical entre les plans médians des deuxième et troisième panneaux.

Par exemple, au moins un panneau est plein et sensiblement plan.

Le décanteur peut comprendre deux ensembles symétriques par rapport au plan vertical longitudinal médian de la cuve, chaque ensemble comportant chacun entre trois et sept panneaux sensiblement plans, superposés et écartés verticalement l'un de l'autre, lesdits panneaux étant inclinés d'un angle compris entre 40 et 50°, de haut en bas vers ledit plan vertical longitudinal médian de la cuve.

Selon un mode préféré, l'invention a pour objet une station d'épuration comprenant au moins un tel décanteur.

Les autres caractéristiques de l'invention résultent de la description qui suit de modes de réalisation, description effectuée en référence aux figures annexées dans lesquelles :
- la figure 1 est une vue schématique en section transversale d'un décanteur selon l'invention, comprenant des panneaux formant surface de décantation ;
- la figure 2 est une vue en coupe, selon la ligne AA, du décanteur de la figure 1 ;
- la figure 3 est une vue en coupe du décanteur de la figure 1, selon la ligne BB de la figure 2 ;
- les figures 4a et 4h sont des représentations schématiques de différents modes de réalisation possibles du décanteur de la figure 1, en ce qui concerne les panneaux, les figures 4a à 4d, 4f et 4g représentant des modes de réalisation ne faisant pas partie de l'invention.
- la figure 5 est une représentation schématique d'une station d'épuration ne faisant pas partie de l'invention comprenant notamment un décanteur; un filtre ou une installation de filtration, et un digesteur anaérobie de boues, illustrant en outre les étapes d'un procédé de traitement des effluents usés dans ladite station d'épuration ;
- la figure 6 est une vue schématique en coupe verticale longitudinale d'un filtre prévu dans la station d'épuration, selon un mode de réalisation possible ;
- la figure 7 est une vue schématique en coupe, selon un plan vertical longitudinal médian, d'un digesteur prévu dans la station d'épuration, selon un mode de réalisation possible ;
- la figure 8 est une vue schématique en perspective du digesteur de la figure 7, vu selon la même coupe.

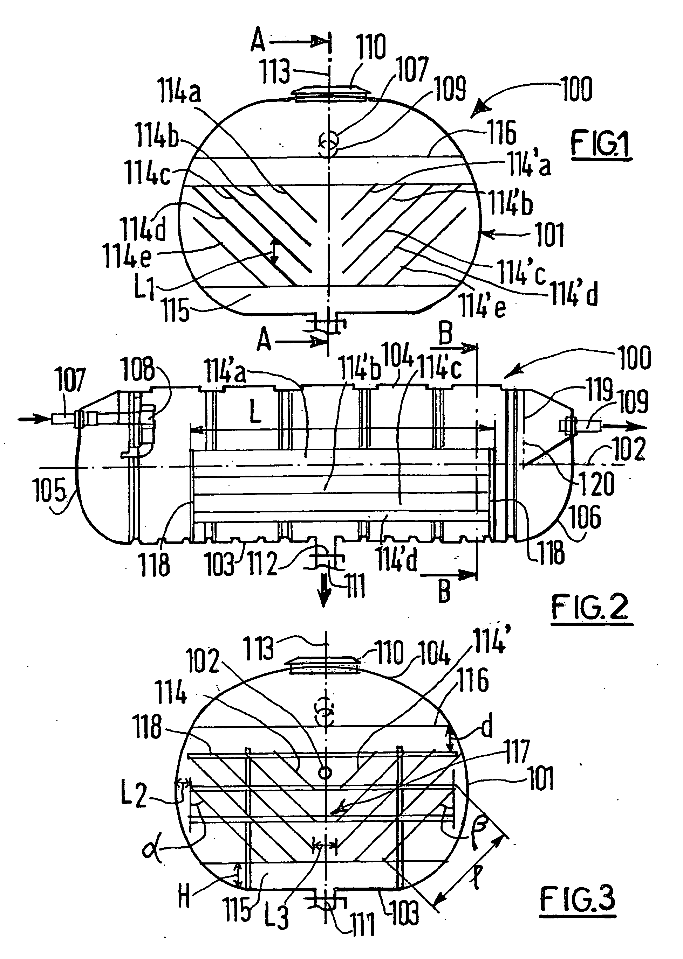

On se réfère tout d'abord aux figures 1 à 3 qui représentent un décanteur 100 selon l'invention, destiné au traitement des effluents usés.

Le décanteur 100 comprend une cuve 101 de forme générale sensiblement cylindrique d'axe 102, par rapport auquel est défini le terme « longitudinal ». La cuve 101 est fermée à l'exception de quatre ouvertures comme on le verra ci-après. La cuve est par exemple réalisée par rotomoulage ou injection d'une matière plastique éventuellement armée de fibres de verre. A titre d'exemple, elle peut avoir un volume de 30 m³.

La cuve 101 est enterrée, et positionnée de sorte que l'axe 102 soit sensiblement horizontal. Elle comporte une paroi latérale sensiblement cylindrique définissant un fond 103 et une paroi supérieure 104, ainsi qu'une une paroi d'extrémité amont 105 et une paroi d'extrémité aval 106.

En partie supérieure de la paroi amont 105 est ménagée une ouverture permettant l'entrée dans le décanteur 100 des effluents à décanter, par un conduit d'alimentation 107. Le conduit d'alimentation 107 se prolonge à l'intérieur de la cuve 101 sensiblement parallèlement à l'axe 102 sur une longueur de l'ordre de 50 cm par exemple, puis verticalement vers le bas sur une longueur voisine, et enfin sensiblement parallèlement à l'axe 102, vers la paroi amont 105, de sorte à former à l'intérieur de la cuve 101 un coude 108 ouvert vers l'amont. Le coude 108 vise à réduire les turbulences formées par l'alimentation en effluents et susceptibles de contrarier la décantation.

En partie supérieure de la paroi aval 106, à une distance du fond 103 légèrement inférieure à la distance entre le fond 103 et l'ouverture d'entrée, est ménagée une ouverture permettant l'évacuation des effluents décantés hors du décanteur 100, par un conduit d'évacuation 109.

La paroi supérieure 104 de la cuve 101 peut quant à elle comporter une trappe de visite 110.

Enfin, dans le fond 103 de la cuve peut être ménagé un orifice d'évacuation des boues issues de la décantation, ledit orifice étant connecté à un conduit d'évacuation 111 desdites boues, des moyens de coupure 112 dudit conduit d'évacuation 111 étant prévus. En variante, les moyens d'évacuation peuvent comporter des pompes refoulantes immergées dans la cuve 101 ou des tuyaux aspirants remontant au-dessus de la cuve 101 et reliés à une pompe aspirante.

La cuve présente en outre un plan de symétrie 113, vertical, longitudinal et médian.

Le décanteur 100 présente une surface de décantation formée par la face supérieure de panneaux 114 disposés à l'intérieur de la cuve 101. Quel que soit le mode de réalisation considéré, le plan moyen d'un panneau 114 est sensiblement parallèle au sens d'écoulement des effluents, soit ici sensiblement parallèle à l'axe horizontal 102, et incliné, en projection dans un plan vertical, d'un angle α par rapport à la verticale, compris entre 15 et 60° (voir figure 3).

Un panneau est par exemple constitué d'une plaque métallique sensiblement plane et rectangulaire, prévue pour permettre aux boues introduites dans la cuve 101 de se déposer sur la face supérieure de ladite plaque puis de glisser sur ladite face supérieure vers le fond 103 de la cuve 101.

Dans la réalisation des figures 1 à 3, les panneaux 114 sont disposés en deux ensembles, symétriquement par rapport au plan vertical 113.

Le premier ensemble (à gauche sur les figures 1 et 3) comprend cinq panneaux 114a à 114e sensiblement parallèles, superposés verticalement, et écartés les uns des autres d'une distance sensiblement constante. L'écartement vertical L1 entre deux panneaux 114 successifs est compris entre 20 et 50 cm, par exemple de l'ordre de 30 cm. En variante, l'écartement vertical entre deux panneaux successifs pourrait être variable, selon la position verticale des panneaux considérés dans la cuve, c'est-à-dire leur profondeur sous le niveau d'effluents.

Les panneaux 114a à 114e sont inclinés de haut en bas depuis la paroi latérale sensiblement verticale de la cuve 101 vers le plan vertical 113, d'un angle α compris entre 40 et 50°, notamment de l'ordre de 45°.

Le premier ensemble de panneaux 114 est logé dans un espace de contour sensiblement rectangulaire, en vue en coupe transversale (voir figure 3). De ce fait, et compte tenu de leur inclinaison, les panneaux 114 présentent des largeurs l différentes selon leur distance par rapport au fond 103 de la cuve 101, la largeur l des panneaux 114 étant d'autant plus petite que l'on s'éloigne du panneau médian 114c. En revanche, leurs longueurs L (parallèlement à l'écoulement des effluents) sont sensiblement égales, et par exemple voisines de 3 m.

La superposition des panneaux permet d'augmenter considérablement la surface de décantation dans un même volume de cuve. Ainsi, dans l'exemple de réalisation représenté sur les figures 1 à 3, avec un angle α voisin de 45°, la surface de décantation pour 1 mètre linéaire de panneau est la suivante :

| | | | | | |
|---|---|---|---|---|---|
| panneau | 114a | 114b | 114c | 114d | 114e |
| largeur l en cm (voir figure 3) | 54 | 97 | 140 | 157 | 114 |
| surface projetée par mètre linéaire (m²) | 0,38 | 0,69 | 0,9 | 1,11 | 0,81 |
| surface totale projetée par mètre linéaire (m²) | 7,96 | | | | |

La distance horizontale L2 entre la paroi latérale verticale de la cuve 101 et le premier ensemble de panneaux est de l'ordre de 10 cm. Ainsi, il est ménagé un espace de largeur suffisamment grande pour permettre le passage des matières en suspension contenues dans les effluents usés. Par ailleurs, le premier ensemble de panneaux est également écarté horizontalement du plan vertical 113, comme on le verra plus loin.

L'extrémité inférieure du premier ensemble de panneaux est située à une hauteur verticale H au-dessus du fond 103 de la cuve 101. Cette hauteur H, par exemple de l'ordre de 30 cm, permet de ménager un espace 115 au-dessus du fond 103 pour l'accumulation des boues issues de la décantation.

Quant à l'extrémité supérieure du premier ensemble de panneaux, elle est située à une distance d au-dessous du niveau 116 des effluents à l'intérieur de la cuve 101. La distance d est par exemple de l'ordre de 30 cm.

Le deuxième ensemble (à droite sur les figures 1 et 3) est symétrique du premier par rapport au plan vertical 113, et comprend cinq panneaux 114'a à 114'e. L'écartement horizontal L3 entre les premier et deuxième ensembles de panneaux 114, 114' est compris entre 20 et 50 cm, et notamment voisin de 30 cm. L'espace 117 ainsi ménagé entre les deux ensembles de panneaux 114, 114' permet aux boues collectées sur les panneaux de tomber vers le fond 103 de la cuve 101 sans retomber sur des panneaux inférieurs, les boues étant en outre dirigées et recueillies en zone centrale du fond 103 de la cuve 101.

Des moyens 118 de support et de fixation des panneaux 114, 114' à la cuve 101 sont disposés au voisinage des extrémités amont et aval desdits panneaux. Dans la réalisation représentée, les moyens 118 de support comprennent deux tiges sensiblement verticales et trois tiges sensiblement horizontales sur lesquelles sont fixées les panneaux 114, 114'. Des moyens de support intermédiaires peuvent également être prévus pour des questions de tenue mécanique des moyens de support. Dans ce cas, les panneaux 114, 114' peuvent être réalisés en deux parties adjacentes au voisinage des moyens de support intermédiaires.

On décrit à présent le mode de fonctionnement du décanteur 100.

Les effluents usés, contenant des matières en suspension qui seront récupérées sous forme de boues, sont introduits dans le décanteur 100 par le conduit d'alimentation 107 et s'écoulent dans la cuve 101 vers le conduit d'évacuation 109, sensiblement longitudinalement. Il est maintenu dans la cuve 101 un niveau d'effluents 116 comme représenté sur les figures 1 et 3. Le niveau 116 d'effluents affleure sensiblement l'extrémité inférieure du conduit d'évacuation 109.

Lors de l'écoulement des effluents dans la cuve 101, compte tenu de la différence de densité entre les boues et les effluents, les boues se déposent par gravité sur la surface de décantation - les panneaux 114, 114' - puis glissent sur cette surface, notamment sous l'action de poussée des boues qui tombent ultérieurement sur la surface de décantation, au fur et à mesure que l'écoulement et la décantation se poursuivent.

Par gravité, les boues collectées sur les panneaux 114, 114' tombent ensuite au fond 103 de la cuve 101.

Afin de permettre cette décantation, la surface de décantation formée par les panneaux 114, 114' présente un état de surface et un coefficient de frottement adaptés aux différents paramètres suivants : nature des effluents et des boues introduites dans la cuve, angle α d'inclinaison des panneaux, débit d'alimentation en effluents. L'homme du métier sait choisir les panneaux qui conviennent en fonction de ces différents paramètres pour obtenir une décantation satisfaisante.

Les effluents décantés débarrassés au moins en partie des matières en suspension sont évacués par le conduit d'évacuation 109 et acheminés, le cas échéant, vers une autre unité de traitement. Les boues peuvent être évacuées par simple gravité ou à l'aide de moyens de pompage appropriés.

Il est prévu une paroi siphoïque 119 disposée à l'intérieur de la cuve 101 en amont et en regard du conduit d'évacuation 109 des effluents décantés, de sorte à permettre la rétention des matières flottantes à l'intérieur de la cuve et éviter leur évacuation avec les effluents décantés. La paroi siphoïque 119 comprend :
- d'une part une partie sensiblement verticale s'étendant depuis la paroi supérieure 104 de la cuve 101 et sensiblement jusqu'à l'axe 102, ladite partie verticale présentant à sa partie inférieure, sous le niveau 116 des effluents, une ouverture 120 pour le passage des effluents ;
- d'autre part une partie s'étendant en oblique depuis l'extrémité inférieure de la partie verticale vers la paroi aval 106 de la cuve 101.

Quant aux boues issues de la décantation, elles sont évacuées par le conduit d'évacuation 111 et acheminées, le cas échéant, vers une autre unité de traitement. En variante, le fond 103 de la cuve peut ne pas comprendre de conduit d'évacuation 111 des boues, les boues étant alors temporairement stockées dans la cuve 101, celle-ci étant périodiquement vidangée via la trappe de visite 110 ou l'orifice d'évacuation ménagé dans le fond.

Un tel décanteur 100 présente de nombreux avantages.

Tout d'abord, l'efficacité de décantation d'un tel décanteur peut atteindre 90 %.

En outre, le décanteur se présente sous la forme d'une cuve préfabriquée, qui peut être installée même sur des sites difficiles d'accès. Son implantation ne nécessite aucune infrastructure de type génie civile lourde. De ce fait, le décanteur permet notamment, mais non exclusivement, de répondre de manière avantageuse au problème du traitement primaire des effluents usés pour des petites collectivités, problème auquel ne pouvaient pas répondre de manière simple les solutions préalablement existantes.

De plus, ce type de décanteur permet d'augmenter facilement la surface de décantation en augmentant le nombre de panneaux superposés et/ou en augmentant la longueur des panneaux, sans modification du volume de la cuve, de sorte à pouvoir couvrir toute la gamme des débits de pointe générés par les populations concernées. L'invention permet ainsi de multiplier la capacité de décantation par 3 pour les cuves simples (lorsque les boues sont temporairement stockées au fond de la cuve), par 15 à 34 si les boues sont évacuées et traitées séparément.

Il peut être prévu une installation de décantation comprenant plusieurs décanteurs 100 en parallèle, de façon à augmenter la capacité de décantation, mais également à optimiser les opérations de décantation et vidange éventuelles des décanteurs.

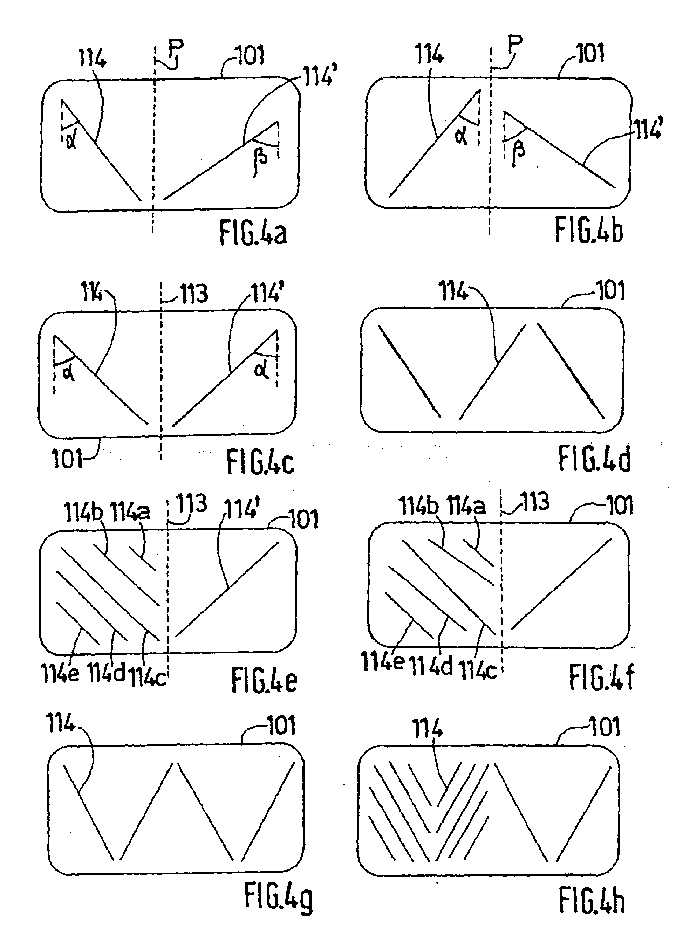

D'autres dispositions possibles des panneaux du décanteur sont représentées schématiquement sur les figures 4e et 4h, les dispositions représentées sur les figures 4a à 4d, 4f et 4g ne faisant pas partie de l'invention.

Sur la figure 4a, le décanteur comprend un premier panneau 114 (à gauche) incliné d'un angle α de haut en bas et vers un plan P vertical longitudinal mais non médian de la cuve 101. Un deuxième panneau 114' (à droite) est incliné d'un angle β différent de α, de haut en bas et vers le plan P.

Sur la figure 4b, le premier panneau 114 est incliné d'un angle α de bas en haut vers le plan P, le deuxième panneau 114' étant incliné d'un β différent de α, de bas en haut vers le plan P.

La réalisation de la figure 4c est similaire à celle de la figure 4a, le plan P étant confondu avec le plan médian 113, les panneaux 114, 114' étant inclinés d'un même angle α.

Le décanteur peut également comporter trois ensembles de panneaux inclinés alternativement de sorte à former un zig-zag (figure 4d).

Sur la figure 4e, similaire à la figure 4c, le premier panneau est remplacé par un ensemble de cinq panneaux 114a à 114e superposés et sensiblement parallèles (comme dans le cas de la figure 3), tandis que le deuxième panneau 114' est toujours unique.

En variante, les panneaux 114a à 114e peuvent ne pas être parallèles entre eux, comme représenté sur la figure 4f. La partie gauche de la cuve comporte alors un groupe de cinq ensembles de panneaux (un ensemble de panneaux étant défini par une direction d'inclinaison).

Enfin, la cuve 101 peut comporter des premier, deuxième, troisième et quatrième ensembles de panneaux 114, les panneaux étant agencés de sorte à former sensiblement un W ou, à l'inverse, un M. Les ensembles peuvent comporter chacun un unique panneau 114 (figure 4g) ou tout ou partie des ensembles peuvent comporter une pluralité de panneaux superposés sensiblement parallèlement. Dans le cas de la figure 4h, les premier et deuxième ensembles comportent chacun cinq panneaux superposés, tandis que les troisième et quatrième ensembles comportent chacun un unique panneau.

Selon une réalisation possible, le décanteur 100 comprend, par rapport au sens de l'écoulement des effluents, au moins une première et une deuxième série de panneaux 114, 114', la deuxième série étant située en aval de la première série, lesdites séries comportant chacune au moins un premier et un deuxième ensembles d'au moins un panneau. Au sein de chaque série, les panneaux peuvent être disposés selon l'une des réalisations des figures 4a à 4h, ou selon des réalisations mixtes.

Les deux séries sont par exemple situées de part et d'autre d'un plan vertical orthogonal à l'axe 102 de la cuve 101. La première série, située en amont, peut comporter des panneaux en nombre, inclinaison et/ou état de surface tels que la performance de décantation soit moyenne. La deuxième série, par laquelle passent ensuite les effluents, peut quant à elle comporter des panneaux agencés pour permettre une décantation beaucoup plus performante. Ainsi, la première série vise à retenir les particules de dimensions plus importantes, tandis que la deuxième série permet de décanter les particules plus fines. Untel décanteur 100 permet d'améliorer encore l'extraction des boues.

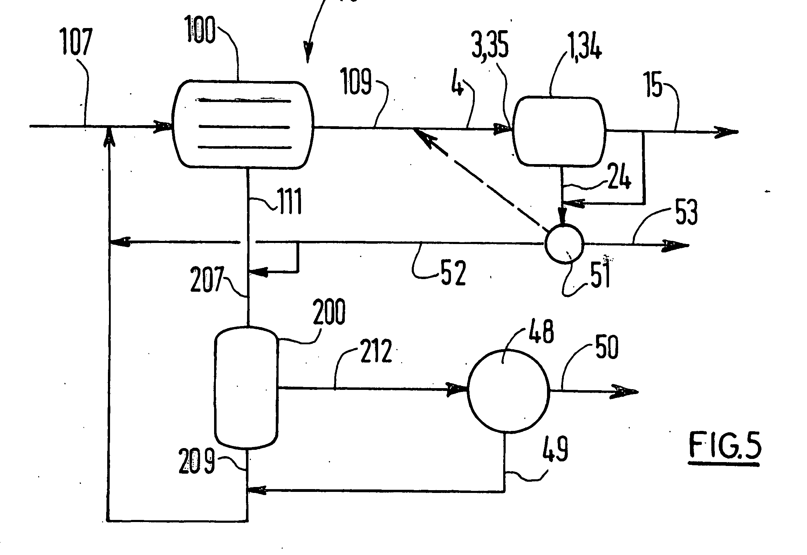

On décrit à présent, en référence à la figure 5, une station d'épuration 46 des effluents usés qui ne fait pas partie de l'invention.

Les effluents bruts sont amenés via un conduit d'alimentation 107 en entrée du décanteur primaire 100, de sorte à être débarrassés d'une part importante de leurs matières en suspension.

Le conduit d'évacuation 109 des effluents décantés est connecté à l'entrée des effluents à filtrer d'un filtre 1 ou d'une installation de filtration 34 comportant plusieurs filtre 1 fonctionnant en parallèle, via un conduit d'alimentation 4.

Les boues issues de la décantation primaire sont évacuées vers un digesteur 200, via les moyens d'évacuation, par exemple par le conduit d'évacuation 111, connectés à un conduit d'alimentation 207 en boues fraîches d'un digesteur anaérobie de boues 200.

Le digesteur 200 comprend un conduit d'évacuation 209 des effluents connecté à l'entrée d'alimentation en effluents à décanter du décanteur primaire 100, ainsi qu'une sortie d'évacuation des boues digérées connectée, via un conduit d'évacuation 212, à l'entrée d'un épaississeur 48.

L'épaississeur 48 comporte une sortie 49 de l'eau résiduelle connectée à l'entrée d'alimentation en effluents à décanter du décanteur primaire 100, éventuellement via le conduit d'évacuation 209 des effluents du digesteur 200.

L'épaississeur 48 comporte également une sortie 50 des boues épaissies. Ces boues peuvent subir un conditionnement et un traitement appropriés en vue de leur utilisation, notamment pour l'amendement des sols. Elles peuvent également être dirigées vers une décharge ou une unité d'incinération.

Les effluents filtrés par le filtre 1, ou l'installation de filtration 34, sont évacués par un conduit d'évacuation 15. Dans le cas où le filtre 1 est apte à retenir les matières en suspension contenues dans les effluents à filtrer, les effluents filtrés sont rejetés directement. Dans le cas inverse, les effluents filtrés sont dirigés vers l'entrée d'un décanteur secondaire 51.

Le filtre 1 comprend également des sorties de soutirage permettant l'évacuation de la biomasse par des conduits de soutirage 24, ceux-ci pouvant être connectés soit à l'entrée du décanteur secondaire 51, soit, lorsque la station ne comprend pas de décanteur secondaire, à l'entrée d'alimentation en effluents à décanter du décanteur primaire 100 ou à l'entrée d'alimentation en boues fraîches du digesteur 200.

Le décanteur secondaire 51 comporte des moyens d'évacuation des boues issues de la décantation, connectés soit à l'entrée d'alimentation en effluents à décanter du décanteur primaire 100, via un conduit d'évacuation 52, débouchant éventuellement dans le conduit 209, soit à l'entrée d'alimentation en boues fraîches du digesteur 200. Une partie de ces boues peut également être renvoyée en tête du filtre 1 pour en maintenir la biomasse à un niveau désiré.

En outre, le décanteur secondaire 51 comporte un conduit d'évacuation 53 des effluents décantés.

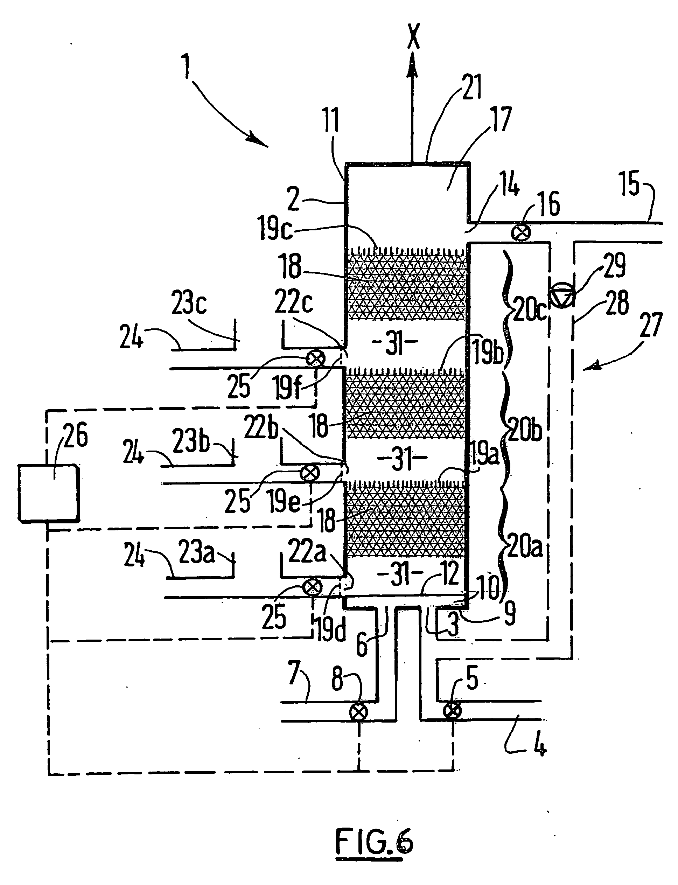

Dans une réalisation possible qui ne fait pas partie de l'invention, représentée sur la figure 6, le filtre 1 comprend, selon une définition générale, un réacteur 2 dans lequel le flux d'effluents à filtrer est prévu pour circuler de bas en haut, ledit réacteur 2 comprenant :
- en partie basse, une entrée 3 des effluents à filtrer et une entrée 6 de gaz oxygéné ;
- et, en partie haute, une sortie 14 des effluents filtrés ;
- des moyens filtrants 18 comprenant des couches de particules d'un matériau solide formant supports et une biomasse accrochée sur la surface desdits supports, lesdits moyens filtrants 18 ayant une densité inférieure à la densité des effluents à filtrer et étant interposés entre l'entrée 3 des effluents à filtrer et la sortie 14 des effluents filtrés.

Le réacteur 2 est subdivisé en au moins trois compartiments superposés formant étages au moyen d'au moins deux parois 19a, 19b, 19c munies d'ouvertures, lesdites ouvertures étant agencées pour retenir les moyens filtrants 18, de sorte à former dans le réacteur :
- au moins deux étages de filtration 20a, 20b, 20c ;
- et un étage supérieur de sortie 17, la sortie 14 des effluents filtrés débouchant dans l'étage supérieur de sortie 17.

Chaque étage de filtration 20a, 20b, 20c est pourvu d'une couche de ses propres moyens filtrants 18 et comprend, en partie inférieure, une sortie de soutirage 22a, 22b, 22c de la biomasse excédentaire, la quantité et la densité des moyens filtrants 18 dans chaque étage de filtration 20a, 20b, 20c étant telles que, en mode soutirage, la partie inférieure d'au moins le ou les étages inférieurs 20a, 20b dans laquelle débouche la sortie de soutirage 22a, 22b est exempte de moyens filtrants, de manière à permettre la récupération de la biomasse excédentaire.

Le réacteur 2 définit un axe principal X orienté verticalement. L'entrée 3 des effluents à filtrer est reliée à un conduit d'alimentation 4 muni d'une vanne 5, et l'entrée 6 de gaz oxygéné est reliée à un conduit d'alimentation 7 muni d'une vanne 8. Selon un mode de réalisation, les deux entrées 3, 6 sont prévues dans la paroi inférieure 9 du réacteur 2 et débouchent dans un compartiment d'entrée 10 délimité par une partie de la paroi latérale 11 du réacteur, et par une paroi supérieure interne 12 perméable aux effluents et au gaz oxygéné.

La sortie 14 des effluents filtrés est reliée à un conduit d'évacuation 15 muni d'une vanne 16, et débouche dans un étage supérieur de sortie 17 du réacteur.

Le réacteur 2 est subdivisé en compartiments superposés formant étages de filtration, par des grilles 19a, 19b, 19c, l'étage supérieur de sortie 17, formé entre la paroi supérieure 21 du réacteur et la paroi 19c supérieure disposée en regard, étant exempt de moyens filtrants.

Chaque étage de filtration 20a, 20b, 20c comprend en partie inférieure une sortie de soutirage 22a, 22b, 22c de la biomasse excédentaire, connectée à un conduit de soutirage 24 muni d'une vanne 25. Un compartiment de récupération 23a, 23b, 23c de ladite biomasse excédentaire peut être prévu.

Les moyens filtrants 18 sont prévus pour flotter, au moins dans certains compartiments, en mode soutirage, de sorte à former un espace inférieur 31 libre exempt de moyens filtrants. Des grilles 19d, 19e, 19f permettent de retenir les moyens filtrants 18. Un moyen de détection 26 de la quantité de biomasse excédentaire peut également être prévu.

Le filtre 1 peut comprendre des moyens de recirculation 27 des effluents filtrés, comportant un conduit 28 associé à une pompe 29, pour traitement supplémentaire d'au moins une partie des effluents filtrés.

Lors de la phase de filtration, les effluents et le gaz circulent de façon ascendante à travers les différents étages de filtration. Les effluents filtrés sont évacués par le conduit 15, et la biomasse reste sur les supports. L'alimentation en effluents et/ou en gaz est continue ou discontinue.

Lors de la phase de lavage, la biomasse excédentaire de l'étage choisi est récupéré par le conduit de soutirage 24 correspondant par flux descendant des effluents contenus dans le réacteur 2.

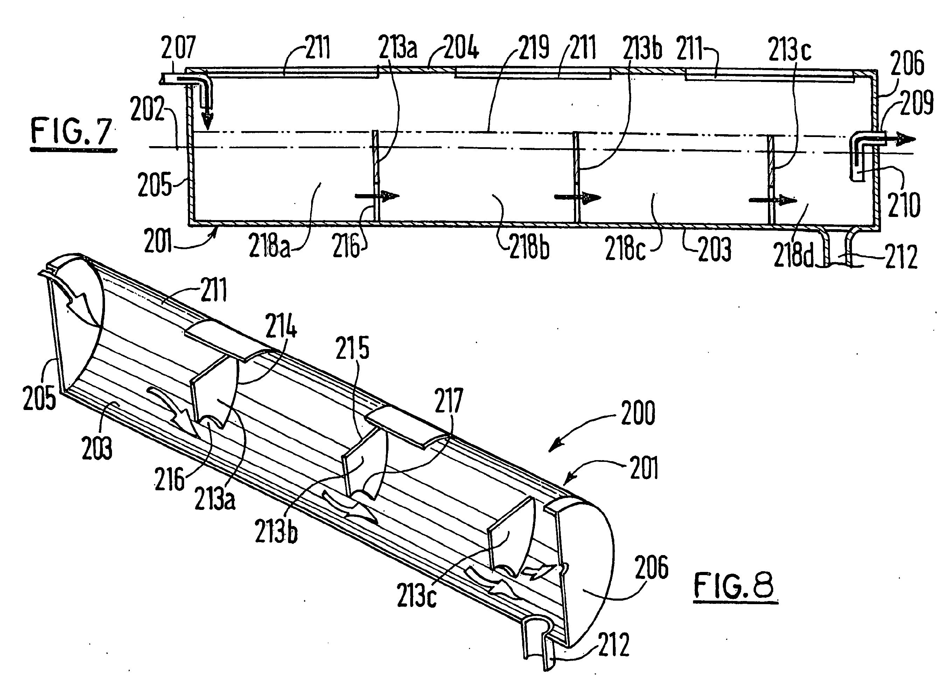

Selon une réalisation possible qui ne fait pas partie de l'invention, représentée sur les figures 7 et 8, le digesteur 200 comprend, selon une définition générale, une cuve 201 ayant un fond 203 sensiblement horizontal, un conduit d'alimentation 207 de la cuve en boues fraîches, un conduit d'évacuation 209 des effluents hors de la cuve, et des moyens d'évacuation 212 des boues digérées hors de la cuve, ladite cuve comportant au moins une paroi 213a, 213b, 213c transversale à l'écoulement des effluents, la paroi définissant un compartiment amont 218a, 218b, 218c et un compartiment aval 218b, 218c, 218d, de sorte que la cuve présente un premier compartiment amont 218a, dans lequel débouche le conduit d'alimentation 207 en boues fraîches, et un dernier compartiment aval 218d, dans lequel débouche le conduit d'évacuation 209 des effluents. La paroi 213a, 213b, 213c présente, à sa partie inférieure, une ouverture de communication 216 du compartiment amont au compartiment aval, de sorte à permettre le passage des boues et la circulation des effluents, au-dessus et à travers la couche de boues maintenue au fond de la cuve, de façon sensiblement horizontale du premier compartiment amont 218a au dernier compartiment aval 218d.

La cuve 201, sensiblement cylindrique ou de section verticale sensiblement rectangulaire, positionnée de sorte que son axe 202 soit horizontal, est fermée, à l'exception des ouvertures suivantes :
- une ouverture d'entrée, ménagée dans la paroi amont 205, reliée au conduit d'alimentation 207 en boues fraîches qui forme un coude 208 ;
- une ouverture d'évacuation des effluents, ménagée dans la paroi aval 206, reliée au conduit d'évacuation 209 formant une prise siphoïque 210 ;
- un orifice d'évacuation des boues digérées, dans le fond 203, connecté à un conduit d'évacuation 212 ;
- une trappe de visite 211 prévue dans la paroi supérieure 204.

Le digesteur 200 comporte trois parois transversales respectivement amont 213a, intermédiaire 213b, et aval 213c, présentant un contour annulaire 214 épousant la forme intérieure de la cuve 201 et un bord supérieur 215 horizontal. La hauteur des parois est inférieure au diamètre de la cuve, et par exemple de l'ordre de 30 cm. Dans la partie inférieure de chaque paroi 213a, b, c est ménagée une ouverture de communication 216 présentant un bord supérieur 217 annulaire.

La cuve 201 est ainsi divisée longitudinalement en quatre compartiments 218a, 218b, 218c, 218d. Les parois permettent de retenir dans chaque compartiment les boues formées par agglomération des matières en suspension, tandis que les matières flottantes en excès peuvent passer par débordement d'un compartiment amont à un compartiment aval, voire l'inverse.

Les boues fraîches introduites dans le digesteur 200 ont une concentration en matière sèche inférieure à 25 g/l. Elles se déposent sur le fond de la cuve, sous forme d'une couche de faible épaisseur, par exemple inférieure à 0,5 m. Il est maintenu dans la cuve 201 un niveau 219 d'effluents. Les boues sont progressivement dégradées et liquéfiées. Elles passent alors dans les compartiments successifs par les ouvertures de communication 216. Les effluents s'écoulent parallèlement à l'axe 202, emportant avec eux les produits solubles issus de la digestion des boues.

## Revendications

1. Décanteur destiné au traitement des effluents usés contenant des boues, du type comprenant :
- une cuve (101) ayant un fond (103) et présentant, par rapport au sens de l'écoulement des effluents, une partie amont dans laquelle débouche un conduit d'alimentation (107) en effluents usés et une partie aval dans laquelle débouche un conduit d'évacuation (109) des effluents décantés ;
- une surface de décantation disposée dans la cuve (101), formée par la face supérieure d'au moins un panneau (114, 114') de décantation, ledit panneau présentant un plan moyen parallèle au sens d'écoulement des effluents et incliné, dans un plan transversal à l'écoulement des effluents, et par rapport à la projection orthogonale de la verticale dans ledit plan transversal, d'un angle (a,p) ;
- des moyens d'évacuation (111) des boues issues de la décantation hors de la cuve (101) ;
le conduit d'alimentation (107) étant ménagé en partie supérieure d'une paroi amont (105) le décanteur comprenant au moins un premier ensemble d'au moins deux panneaux (114, 114a, 114b,114c, 114d, 114e) superposés dont les plans moyens sont parallèles et inclinés selon un premier angle (α) compris entre 15 et 60°, et au moins un deuxième ensemble d'au moins un panneau (114', 114'a, 114'b, 114'c, 114'd, 114'e) de décantation incliné selon un deuxième angle (β) compris entre 15 incliné selon un deuxième angle (β) différent du premier angle et compris entre 15 et 60°, les angles (α, β), l'état de surface et le coefficient de frottement des panneaux étant choisis de sorte que, lors de l'écoulement des effluents dans la cuve, les boues se déposent sur la surface de décantation puis glissent vers le fond de la cuve, au moins un passage d'évacuation (117) des boues étant prévu entre les panneaux des deux ensembles, de sorte à permettre aux boues collectées sur les faces supérieures des panneaux de tomber par gravité sur le fond (103) de la cuve(101), l'écartement vertical (L1) entre les plans médians de deux panneaux successifs étant compris entre 20 et 50 cm.

2. Décanteur selon la revendication 1, **caractérisé en ce que** les premier et deuxième ensembles sont situés de part et d'autre d'un plan de séparation (113, P) vertical et parallèle au sens d'écoulement des effluents, les panneaux (114, 114') d'un ensemble étant inclinés de haut en bas vers ledit plan de séparation.

3. Décanteur selon la revendication 1, **caractérisé en ce que** les premier et deuxième ensembles sont situés de part et d'autre d'un plan de séparation (113, P) vertical et parallèle au sens d'écoulement des effluents, les panneaux (114, 114') d'un ensemble étant inclinés de bas en haut vers ledit plan de séparation.

4. Décanteur selon la revendication 2 ou 3, **caractérisé en ce que** le plan de séparation est le plan vertical longitudinal médian (113) de la cuve.

5. Décanteur selon l'une des revendications 1 à 4, **caractérisé en ce qu'**au moins l'un des panneaux (114) du premier ensemble est l'image de l'un des panneaux (114') du deuxième ensemble par une symétrie par rapport au plan de séparation (113, P).

6. Décanteur selon l'une des revendications 1 à 5, **caractérisé en ce qu'**il comprend un troisième ensemble d'au moins un panneau et un quatrième ensemble d'au moins un panneau, les panneaux (114, 114') des premier, deuxième, troisième et quatrième ensembles étant agencés de sorte à former sensiblement un W ou un M.

7. Décanteur selon l'une des revendications 1 à 6, **caractérisé en ce que** les ensembles de panneaux sont écartés d'une distance transversale comprise entre 20 et 50 cm.

8. Décanteur selon l'une des revendications 1 à 7, **caractérisé en ce qu'**au moins un ensemble comprend au moins un premier, un deuxième et un troisième panneaux dont les plans moyens sont sensiblement parallèles, lesdits premier, deuxième et troisième panneaux étant sensiblement superposés dans cet ordre et écartés verticalement l'un de l'autre, l'écartement vertical entre les plans médians des premier et deuxième panneaux étant sensiblement identique à l'écartement vertical entre les plans médians des deuxième et troisième panneaux.

9. Décanteur selon l'une des revendications 1 à 8, **caractérisé en ce qu'**au moins un panneau (114,114') est plein et sensiblement plan.

10. Décanteur selon l'une des revendications 1 à 9, **caractérisé en ce que** l'angle (α, β) d'inclinaison des panneaux est compris entre 30 et 60.

11. Décanteur selon l'une des revendications 1 à 10, **caractérisé en ce que** l'angle (α, β) d'inclinaison des panneaux est compris entre 40 et 50.

12. Décanteur selon l'une des revendications 1 à 11, **caractérisé en ce qu'**il comprend deux ensembles symétriques par rapport au plan vertical longitudinal médian de la cuve, chaque ensemble comportant chacun entre trois et sept panneaux (114, 114') sensiblement plans, superposés et écartés verticalement l'un de l'autre, lesdits panneaux étant inclinés d'un angle compris entre 40 et 50 , de haut en bas vers ledit plan vertical longitudinal médian (113) de la cuve (101).

13. Décanteur selon l'une des revendications 1 à 12, **caractérisé en ce que** les panneaux (114, 114') sont situés à une distance (L2) de la paroi latérale de la cuve (101) suffisamment grande pour permettre le passage des matières en suspension contenues dans les effluents usés entre lesdits panneaux et ladite paroi latérale de la cuve.

14. Décanteur selon l'une des revendications 1 à 13, **caractérisé en ce que** les dimensions des panneaux (114, 114') parallèlement à l'écoulement des effluents sont sensiblement égales.

15. Décanteur selon l'une des revendications 1 à 14, **caractérisé en ce qu'**il comprend des moyens (108) de support et de fixation des panneaux (114, 114') à la cuve (101), lesdits moyens (108) étant disposés au voisinage des extrémités amont et aval desdits panneaux (114, 114').

16. Décanteur selon l'une des revendications 1 à 15, **caractérisé en ce que** le conduit d'alimentation (107) débouche en partie supérieure de la partie amont de la cuve (101), et forme à l'intérieur de la cuve un coude (108) ouvert vers l'amont, de sorte à réduire les turbulences formées par l'alimentation en effluents.

17. Décanteur selon l'une des revendications 1 à 16, **caractérisé en ce qu'**il comporte une paroi siphoïque (119) disposée à l'intérieur de la cuve (101) en amont et en regard du conduit d'évacuation (109) des effluents décantés, de sorte à permettre la rétention des matières flottantes à l'intérieur de la cuve (101).

18. Décanteur selon l'une des revendications 1 à 17, **caractérisé en ce que** les moyens d'évacuation des boues issues de la décantation comprennent un orifice d'évacuation ménagé dans le fond (103) de la cuve (101) et un conduit d'évacuation (111) desdites boues connecté audit orifice d'évacuation.

19. Décanteur selon l'une des revendications 1 à 18, **caractérisé en ce qu'**il comprend, par rapport au sens de l'écoulement des effluents, au moins une première et une deuxième série de panneaux (114, 114'), ladite deuxième série étant située en aval de la première série, lesdites séries comportant chacune au moins un premier et un deuxième ensemble d'au moins un panneau.

## Claims

1. A settling tank intended for the treatment of used effluents containing sludge, of the type comprising:
- a tank (101) having a bottom (103) and having, with respect to the flowing direction of the effluents, an upstream portion wherein a feed pipe (107) for used effluents opens, and one downstream portion wherein a discharge pipe (109) for the settled effluents opens;
- a settling surface provided in the tank (101), formed by the upper face of at least one settling panel (114, 114'), said panel having a mid-plane parallel to the flowing direction of the effluents and inclined, in a plane transversal to the flowing of the effluents, and with respect to the orthogonal projection of the vertical onto said transversal plane, an angle (a, p);
- means for discharging (111) the sludge resulting from the settling, out of the tank (101);
said feed pipe (107) being arranged in the upper part of an upstream wall (105) of said tank, said settling tank comprising at least one first assembly of at least two stacked panels (114,114a, 114b, 114c, 114d, 114e), the mid-planes of which are parallel and inclined according to a first angle (α) comprised between 15 and 60° and at least a second assembly of at least one settling panel (114', 114'a, 114'b, 114'c, 114'd, 114'e) inclined according to a second angle (β), different from the first angle and comprised between 15 and 60°, the angles (α, β), the surface condition and the panel friction coefficient being chosen so that, during the flowing of the effluents in the tank, the sludge deposit on the settling surface, then slide towards the bottom of the tank, at least one discharge passage (117) of the sludge being provided between the panels of the two assemblies, so as to allow the sludge collected on the upper faces of the panel to fall by gravity onto the bottom (103) of the tank (101), the vertical clearance (L1) between the mid-planes of two successive panels being comprised between 20 and 50 cm.

2. A settling tank according to claim 1, **characterized in that** the first and second assemblies are positioned on either side of a partition plane, (113, P), vertical and parallel to the flowing direction of the effluents, the panels (114, 114') of one assembly being inclined from top to bottom towards said partition plane.

3. A settling tank according to claim 1, **characterized in that** said first and second assemblies are positioned on either side of a partition plane (113, P) vertical and parallel to the flowing direction of the effluents, the panels (114, 114') of one assembly being inclined from bottom to top towards said partition plane.

4. A settling tank according to claim 2 or 3, **characterized in that** said partition plane is the longitudinal vertical mid-plane (113) of the tank.

5. A settling tank according to one of claims 1 to 4, **characterized in that** at least one of the panels (114) of the first assembly is the image of one of the panels (114') of the second assembly, by symmetry with respect to the partition plane (113, P).

6. A settling tank according to one of claims 1 to 5, **characterized in that** it comprises a third assembly of at least one panel and a fourth assembly of at least one panel, the panels (114, 114') of the first, second, third and fourth assemblies being arranged so as to form substantially a W or a M.

7. A settling tank according to one of claims 1 to 6, **characterized in that** the panel assemblies are separated by a transversal distance comprised between 20 and 50 cm.

8. A settling tank according to one of claims 1 to 7, **characterized in that** at least one assembly comprises at least a first, a second and a third panels, the mid-planes of which are substantially parallel, said first, second and third panels being substantially stacked in this order and vertically separated from each other, the vertical separation between the mid-planes of the first and second panels being substantially identical to the vertical separation between the mid-planes of the second and third panels.

9. A settling tank according to one of claims 1 to 8, **characterized in that** at least one panel (114, 114') is solid and substantially plane.

10. A settling tank according to one of claims 1 to 9, **characterized in that** the inclination angle (α, β) of the panels is comprised between 30 and 60.

11. A settling tank according to one of claims 1 to 10, **characterized in that** the inclination angle (α, β) of the panels is comprised between 40 and 50.

12. A settling tank according to one of claims 1 to 11, **characterized in that** it comprises two assemblies symmetrical with respect to the longitudinal vertical mid-plane of the tank, each assembly comprising between three and seven panels (114, 114') which are substantially plane, stacked and vertically separated from each other, said panels being inclined according to an angle comprised between 40 and 50, from top to bottom towards said longitudinal vertical mid-plane (113) of the tank (101).

13. A settling tank according to one of claims 1 to 12, **characterized in that** said panels (114, 114') are positioned at a distance (L2) from the side wall of the tank (101) which is big enough to allow the passage of matters in suspension contained in the used effluents between said panels and said side wall of the tank.

14. A settling tank according to one of claims 1 to 13, **characterized in that** the dimensions of the panels (114, 114') in parallel to the flowing of the effluents are substantially equal.

15. A settling tank according to one of claims 1 to 14, **characterized in that** it comprises means (108) for supporting and fastening the panels (114, 114') to the tank (101), said means (108) being provided close to the upstream and downstream ends of said panels (114,114 ').

16. A settling tank according to one of claims 1 to 15, **characterized in that** the feed pipe (107) opens at the upper part of the upstream portion of the tank (101), and forms inside the tank a bend (108) open upstream, so as to reduce the turbulences formed by the feeding with effluents.

17. A settling tank according to one of claims 1 to 16, **characterized in that** it comprises a siphoic wall (119) positioned inside the tank (101) upstream from and opposite the settled effluents discharged by the pipe (109), so as to allow the retention of floating matters inside the tank (101).

18. A settling tank according to one of claims 1 to 17, **characterized in that** the means for discharging the sludge resulting from the settling comprise a discharge outlet arranged in the bottom (103) of the tank (101) and a pipe (111) for discharging said sludge connected to said discharge outlet.

19. A settling tank according to one of claims 1 to 18, **characterized in that** it comprises, with respect to the flowing direction of the effluents, at least a first and a second series of panels (114, 114'), said second series being positioned downstream from the first series, said series comprising, each, at least a first and a second assembly of at least one panel.

## Patentansprüche

1. Kläranlage für die Aufbereitung von Schlamm enthaltenden Abwässern, des Typs mit:
- einem Becken (101) mit einem Boden (103), das einen in Bezug auf die Strömungsrichtung der Abwässer vorgelagerten Teil aufweist, in den eine Zuleitung (107) der Abwässer mündet, und einen nachgelagerten Teil, in den eine Ableitung (109) der abgeschiedenen Abwässer mündet;
- einer in dem Becken (101) angeordneten Abscheidefläche, bestehend aus der oberen Fläche mindestens einer Abscheideplatte (114, 114'), wobei die genannte Platte eine mittlere, parallel zur Strömungsrichtung der Abwässer verlaufende Ebene aufweist, die in einer sich quer zur Strömungsrichtung der Abwässer erstreckenden Ebene und in Bezug auf die orthogonale Projektion der Vertikalen in der genannten Querebene geneigt ist um einen Winkel (a, p);
- Ableitungsmittel (111) der aus der Abscheidung kommenden Schlämme außerhalb des Beckens (101);
wobei die Zuleitung (107) am oberen Teil einer vorgelagerten Wand (105) des genannten Beckens vorgesehen ist,
wobei die Kläranlage mindestens eine erste Gruppe von mindestens zwei übereinander angeordneten Platten (114', 114'a, 114'b, 114'c, 114'd, 114'e) umfaßt, deren mittlere Ebenen parallel verlaufen und gemäß einem ersten Winkel (α) zwischen 15 und 60° geneigt sind, und mindestens eine zweite Gruppe von mindestens einer Abscheideplatte (114', 114'a, 114'b, 114'c, 114'd, 114'e), die gemäß einem, sich vom ersten Winkel unterscheidenden zweiten Winkel (β) zwischen 15 und 60° geneigt ist, wobei die Winkel (α, β), der Oberflächenzustand und der Reibungskoeffizient der Platten so gewählt sind, dass sich die Schlämme beim Einströmen der Abwässer in das Becken auf der Abscheidefläche ablagern und dann zum Beckenboden hin gleiten, wobei mindestens ein Abflussdurchgang (117) der Schlämme zwischen den Platten der beiden Gruppen vorgesehen ist, um den an den oberen Flächen der Platten gesammelten Schlämmen zu ermöglichen, durch Schwerkraft auf den Boden (103) des Beckens (101) zu fallen, wobei der vertikale Abstand (L1) zwischen den mittleren Ebenen von zwei aufeinander folgenden Platten zwischen 20 und 50 cm beträgt.

2. Kläranlage gemäß Anspruch 1, **dadurch gekennzeichnet, dass** sich die erste und zweite Gruppe auf jeder Seite einer vertikalen und parallel zur Strömungsrichtung der Abwässer verlaufenden Trennungsebene (113, P) befinden, wobei die Platten (114, 114') einer Gruppe von oben nach unten zur genannten Trennungsebene hin geneigt sind.

3. Kläranlage gemäß Anspruch 1, **dadurch gekennzeichnet, dass** sich die erste und zweite Gruppe auf jeder Seite einer vertikalen und parallel zur Strömungsrichtung der Abwässer verlaufenden Trennungsebene (113, P) befinden, wobei die Platten (114, 114') einer Gruppe von unten nach oben zur genannten Trennungsebene hin geneigt sind.

4. Kläranlage gemäß Anspruch 2 oder 3, **dadurch gekennzeichnet, dass** die Trennungsebene die mittlere vertikale Längsebene (113) des Beckens ist.

5. Kläranlage gemäß einem der Ansprüche 1 bis 4, **dadurch gekennzeichnet, dass** mindestens eine der Platten (114) der ersten Gruppe das Abbild einer der Platten (114') der zweiten Gruppe über eine Symmetrie in Bezug auf die Trennungsebene (113, P) ist.

6. Kläranlage gemäß einem der Ansprüche 1 bis 5, **dadurch gekennzeichnet, dass** sie eine dritte Gruppe von mindestens einer Platte und eine vierte Gruppe von mindestens einer Platte umfaßt, wobei die Platten (114, 114') der ersten, zweiten, dritten und vierten Gruppe so angeordnet sind, dass sie etwa ein W oder ein M bilden.

7. Kläranlage gemäß einem der Ansprüche 1 bis 6, **dadurch gekennzeichnet, dass** die Plattengruppen mit einem Querabstand zwischen 20 und 50 cm angeordnet sind.

8. Kläranlage gemäß einem der Ansprüche 1 bis 7, **dadurch gekennzeichnet, dass** mindestens eine Gruppe mindestens eine erste, eine zweite und eine dritte Platte umfaßt, deren mittlere Ebenen etwa parallel verlaufen, wobei die genannte erste, zweite und dritte Platte etwa in dieser Reihenfolge übereinander angeordnet und vertikal voneinander beanstandet sind, wobei der vertikale Abstand zwischen den mittleren Ebenen der ersten und zweiten Platte etwa identisch ist mit dem vertikalen Abstand zwischen den mittleren Ebenen der zweiten und dritten Platte.

9. Kläranlage gemäß einem der Ansprüche 1 bis 8, **dadurch gekennzeichnet, dass** mindestens eine Platte (114, 114') massiv und etwa eben ist.

10. Kläranlage gemäß einem der Ansprüche 1 bis 9, **dadurch gekennzeichnet, dass** der Neigungswinkel (α,β) der Platten zwischen 30 und 60 beträgt.

11. Kläranlage gemäß einem der Ansprüche 1 bis 10, **dadurch gekennzeichnet, dass** der Neigungswinkel (α,β) der Platten zwischen 40 und 50 beträgt.

12. Kläranlage gemäß einem der Ansprüche 1 bis 11, **dadurch gekennzeichnet, dass** sie zwei in Bezug auf die mittlere vertikale Längsebene des Beckens symmetrische Gruppen umfaßt, wobei jede Gruppe jeweils zwischen drei und sieben etwa ebene Platten (114, 114') aufweist, die übereinander angeordnet und vertikal voneinander beanstandet sind, wobei die Platten in einem Winkel zwischen 40 und 50 geneigt sind, von oben nach unten zur genannten mittleren vertikalen Längsebene (113) des Beckens (101) hin.

13. Kläranlage gemäß einem der Ansprüche 1 bis 12, **dadurch gekennzeichnet, dass** die Platten (114, 114') in Bezug auf die Seitenwand des Beckens (101) in einem ausreichend großen Abstand angeordnet sind, um schwebende, in den Abwässern enthaltene Stoffe zwischen den genannten Platten und der genannten Seitenwand des Beckens durchzulassen.

14. Kläranlage gemäß einem der Ansprüche 1 bis 13, **dadurch gekennzeichnet, dass** die Abmessungen der Platten (114, 114') parallel zur Strömung der Abwässer etwa gleich sind.

15. Kläranlage gemäß einem der Ansprüche 1 bis 14, **dadurch gekennzeichnet, dass** sie Trag- und Befestigungsmittel (108) der Platten (114, 114') an dem Becken (101) umfaßt, wobei die genannten Mittel (108) in der Nähe der vorderen und hinteren Enden der genannten Platten (114, 114') angeordnet sind.

16. Kläranlage gemäß einem der Ansprüche 1 bis 15, **dadurch gekennzeichnet, dass** die Zuleitung (107) im oberen Teil des vorgelagerten Teils des Beckens (101) mündet und innerhalb des Beckens eine nach vorne geöffnete Krümmung (108) bildet, um die von der Zuführung von Abwässern erzeugten Turbulenzen zu reduzieren.

17. Kläranlage gemäß einem der Ansprüche 1 bis 16, **dadurch gekennzeichnet, dass** sie eine innerhalb des Beckens (101), vor und gegenüber der Ableitung (119) der abgeschiedenen Abwässer angeordnete Dükerwand umfaßt, um den Rückhalt der im Becken (101) schwimmenden Stoffe zu ermöglichen.

18. Kläranlage gemäß einem der Ansprüche 1 bis 17, **dadurch gekennzeichnet, dass** die Ableitungsmittel der aus der Abscheidung stammenden Schlämme eine im Boden (103) des Beckens (101) vorgesehene Ableitungsöffnung und eine an die genannte Ableitungsöffnung angeschlossene Ableitung (111) der genannten Schlämme umfassen.

19. Kläranlage gemäß einem der Ansprüche 1 bis 18, **dadurch gekennzeichnet, dass** sie in Bezug auf die Strömungsrichtung der Abwässer mindestens eine erste und eine zweite Reihe von Platten (114, 114') umfaßt, wobei die genannte zweite Reihe vor der ersten Reihe angeordnet ist, wobei die genannten Reihen jeweils mindestens eine erste und eine zweite Gruppe von mindestens einer Platte umfassen.
